(19)

Europäisches
Patentamt
European
Patent Office
Office européen
des brevets

(11) **EP 2 161 246 A2**

(12) **EUROPEAN PATENT APPLICATION**

(43) Date of publication:
**10.03.2010 Bulletin 2010/10**

(21) Application number: **09162872.7**

(22) Date of filing: **16.06.2009**

(51) Int Cl.:
*C04B 9/02* *(2006.01)*        *C04B 9/04* *(2006.01)*
*C04B 28/32* *(2006.01)*       *C04B 40/06* *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **16.06.2008 IT RM20080317**

(71) Applicant: **Eraclit-Venier S.p.A.**
**30175 Venezia (IT)**

(72) Inventor: **FRANCO, Leonardo**
**30175, VENEZIA (IT)**

(74) Representative: **Locas, Davide et al**
**STUDIO ASSOCIATO LEONE & SPADARO**
**Viale Europa, 15**
**00144 Roma (IT)**

(54) **Composition for the making of decorative elements**

(57)    A composition for the making of decorative elements by mould casting, comprises: a powdered part comprising magnesium oxide in an amount equal to about 50%, said magnesium oxide having an International Activity, measured according to the acid citric method, higher than about 30 seconds and lower than about 60 seconds; a liquid part comprising a magnesium chloride solution in an amount higher than about 39.2% and lower than about 50%.

EP 2 161 246 A2

**Description**

The present invention refers to a composition for the making of decorative elements.

In building field the use of elements manufactured by means of casting in moulds is quite diffused in order to decorate environments, rooms, wall, such as jars, statues, tiles, tiles having various projecting decorations, elements with irregular shape or thickness, etc.

A plurality of different mixtures are known which are used in this kind of applications, based on products remarkably different between them, both in terms of performances, and in term of their chemical-physical properties.

A first type of mixture used in such applications is based on plaster based products that are casted in liquid form inside suitable matrix die forming the mould for the product to be manufactured.

Such mixtures, although being surely economic and of easy preparation, allow to manufacture products with very poor mechanical features, both in term of ultimate strength, and in term of surface hardness. It is therefore evident that a decorative element manufactured with such type of plaster based mixtures cannot be widely used, in particular on industrial scale.

Accordingly, as an alternative to such mixtures several cementitious compositions arose. Such compositions allow to obtain products having mechanical features remarkably higher than plaster products, nevertheless they also have relevant disadvantages. In particular, it should be firstly considered the strong environmental impact these products have. In fact, it is known how both in the manufacturing steps, and in the incidental disposal of wastes deriving from such processing, the cement has remarkable problems from the environmental point of view. Secondarily, these compositions normally have long curing times and, accordingly, they are not perfectly suitable for their use in the manufacturing of decorative elements on large-scale.

A third possibility for the manufacturing of such products relates to the use of resins based products. Nevertheless also in this case there are some ecological problems, as the disposal of wastes deriving from such processing could be troublesome. Moreover, the final aspect of the finished product is not particular similar to natural stones, and therefore it gives a strong impression of an unnatural and industrial product to the observer.

Recently, compositions based on magnesium based products, in particular using a composition of magnesium oxide and magnesium chloride, have been also developed. An example of such composition is described in the international patent application WO 2007 014168, in the name of Dennis, describing a composition obtained by initially mixing a magnesium oxide with a filler in a ratio of 1 oxide part to 1-6 filler parts and then mixing the mixture accordingly obtained with magnesium chloride in a ratio of 1 magnesium oxide part to 0.1ö1.2 magnesium chloride parts in weight. Examples of fillers are represented by ashes, clinker and other powdered materials. Moreover also fibrous materials, foaming and surface-active agents can be added to the composition.

Nevertheless such composition requires particularly long curing times, form 1 to 5 days.

Another example of magnesium based composition is described in Chinese patent CN1223979A to Wang Jianguo and it comprises the preparation of a magnesium chloride mixture in an amount from 2 to 4 parts in weight and of water from 2 to 12 parts in weight, to which a is added urea-formaldehyde resin in an amount from 0.01 to 1.5 parts in weight. Such mixture is stirred and mixed with a magnesium oxide composition in an amount from 4 a 5 parts in weight and talc powder in an amount from 0.5 a 4 parts in weight. Nevertheless, such composition still has not enough reduced curing times, from 3 to 8 hours, also followed by a further step in which a coating in liquid ceramic is formed, and, above all, it uses a relevant part non of formaldehyde contain resin, which is known for being cancerogenic.

Hence, the technical problem underlying the present invention is to provide an composition for the manufacturing of decorative elements allowing to overcome the drawbacks mentioned above with reference to the known art.

Such problem is solved by the abrasive composition according to claim 1. composition for the making of decorative elements by mould casting according to claim 1, by the composition according to claim 11, by the method according to claim 12 and by kit according to claim 16.

The present invention provides several relevant advantages. The main advantage lies in that the composition according the present invention allow particularly reduced curing times and as a consequence an high productivity, even guarantying an high mechanical strength of the final product.

Moreover, the composition has a particularly low ecological and environmental impact as it only contains natural components, that are not harmful either for human of for environment, thus without requiring the addition of resins. Moreover, all wastes deriving from the use of such tale composition represent easily disposable wastes, that is a particularly desired feature in the industrial manufacturing.

Finally, the composition according to the present invention allow to obtain decorative elements with high quality aesthetic features, in particular being similar in the external aspect to natural stones.

Other advantages, features and the operation modes of the present invention will be made apparent from the following detailed description of some embodiments thereof, given by way of a non-limiting example.

The composition according to the present invention is based firstly on mixing a powdered part and a liquid part, in a ratio substantially equal to 1:1.

The powdered part is formed by magnesium oxide having particular and determinate chemical-physical features. Such type of oxide is in particular defined as "rapid" or "light" magnesium oxide. More precisely, the composition according to the present invention comprises a magnesium oxide obtained in furnaces having a remarkably lower temperatures than conventional caustic oxide. It is known as magnesium oxide is obtained from calcining in rotating furnaces of a mineral formed by magnesium carbonate that, before being put in the furnace, is subjected to sledging and granulometry selection.

In order to obtain a magnesium oxide with the desired features, that will be simply called in the following as light magnesium oxide, the conditions into which the process used for the manufacturing of such component should be considered. In particular, the process for the manufacturing of light magnesium oxide should take into account two factors: substantially all magnesium carbonate should be converted in magnesium oxide and the sintering of the mineral surface in the furnace should not substantially take place.

Then, with reference to the carbonate size used in the magnesium oxide manufacturing and to the eventual presence of impurities in the mineral (e.g. other minerals present in low percentages that could act as "fluxes", i.e. capable of lowering the melting temperature of the main mineral) the "baking" time, i.e. the time for which the mineral remains in the furnace, and the furnace temperature itself are determined. It is clear how a skilled person, once the carbonate features are known, will be able to obtain, in case empirically, the baking time and the furnace temperature capable of allowing to obtain a magnesium oxide wherein substantially the whole magnesium carbonate is converted into oxide and wherein any sintering of the mineral surface substantially occurs.

Such process thus allow to obtain advantageously a magnesium oxide that, after grinding, will have high solubility and thus high reactivity. As it will be seen in the following, such feature will allow to give extremely short curing time to the composition according to the present invention.

The light magnesium oxide, deriving from the calcining, will be then grinded in suitable grinders, so as to obtain the most appropriate granulometry for using the composition according to the present invention.

More precisely, the chemical-physical features of the light magnesium oxide once it has been grinded and it is therefore ready for being used in the composition according to the present invention are hereby summarized:

- Titre:

$$MgO = 82 - 92\,\%$$

$$CaO \ < 3\,\%$$

$R_2O_3$ (various oxides) < 0.8%
Insoluble residue : < 8 - 13%
Loss on ignition (1000 °C) < 6%
International Activity (citric acid method) = from 30 to 60 seconds

- Granulometry:

Grains retained by sieves:   106 micron < 1%
63 micron < 10 %
53 micron < 8 %

Compacted specific weight: 0,75 - 0,90 kg/l

The International Activity values, which incidentally provides a measurement of the material reactivity, have been obtained according to the citric acid method and, such measurement can be performed as specified in the following.

In general, the aggressiveness of an average strong acid solution on an examined material can be sensed as a reactivity index of the material itself.

It is reminded that the material reactivity is not normally evaluated basing on empirical parameters, since for complex mixtures or for impure materials, an absolute measurement of the material to be industrially used would be excessively complex.

More precisely the definitions "activity or reactivity according to the international method" or "International Activity" refers to the time measurement (in seconds) required for the powdered calcined magnesite reacts (at a given temperature, e.g. 30 °C) with a specific medium strong acid solution , until the solution pH value the change of colour occurs in a specific indicator (e.g. phenolphthalein).

It is important to emphasize that the reactivity of a powdered calcined magnesite is also influenced by the available active surface, due to the granulometric distribution and to the porosity of the product and thus the set of such parameters will allow to define the features of the magnesite used in the composition according to the present invention.

During the International Activity test, it is appropriate to use only reagent having a proven analytic quality and distilled water and, in particular:

monohydrate citric acid (titre $\geq$ 99.8 %) ; ($H_3C_6H_5O_7 - H_2O$);

sodium benzoate (titre $\geq$ 99 %) ; ($C_6H_5COONa$);

1% phenolphthalein hydroalcoholic solution;

acid citric solution 0.4 N.

The test is performed by dissolving 2.5 $\pm$ 0,01 g of sodium benzoate and 280 $\pm$ 0.01 g of monohydrate citric acid in distilled water in 2 1 flask (class A) and stirring until completely dissolved.

Next, the phenolphthalein solution (20 ml) is added until the total content is equal to 2 1.

The content is then transferred to a 10 1 dark glass container and it is further diluted measuring the volumes with the 2 1 flask (this operation is repeated 4 times).

Then, a standardization and a correction of the acid citric solution 0.4 N is provided.

In addition to the above listed elements, also the following reagents are used for the standardization:

sodium hydroxide (NaOH) 1 N - that will be preserved in a firmly closed polyethylene bottle.

Then, the standardization takes place placing 100 ml of acid citric solution, which are measured with a 50 ml pipette (class A) in a 250 ml glass and titrating with a NaOH solution I N by a 50 ml burette (class A) and keeping the glass with a stirring bar on a magnetic stirrer, until the colour change of the phenolphthalein towards pale pink. It should be noted that the required amount of NaOH 1 N is about 40 ml.

With reference instead to the acid citric solution correction, for each 0.1 ml of NaOH 1N added to the 40 ml scheduled, 25 ml of distilled water should be added to the 101 of acid citric solution.

On the contrary, for each 0.1 ml of NaOH IN used less than the 40 ml scheduled, 0.70 g of monohydrate citric acid will be added to the 10 1 of acid citric solution.

It should be noted that, in the test performed, the volumetric glassware used has an analytic accuracy, i.e. class A and, in the description of the measuring process, the use of the letter (A) next to the volumetric measure indicates that class A glassware has been used.

The glassware should also be accurately washed and dried.

Moreover, the instrumentation has the following features:

balance tared with reading precision 0.0001 g and tolerance $\pm$ 0.0005 g;

balance tared with reading precision 0.01 g and tolerance 0.05 g;

thermostatic cup for water at 30 °C to be placed on the stirrer;

magnetic stirrer provided with stirring bars covered with PTFE $\varnothing$ 6 mm and length 3 cm;

thermometers 0 ö 50 °C at least divided in 0.5 °C, one of the thermometers being inserted in rubber cup per flask (in order to allow the reading at 30 °C);

chronometer with 1 second precision;

weighting spatula and paper;

spoon.

It is also advisable to use powdered calcined magnesite having a known activity as a reference sample.

The material will be suitable preserved in hermetic containers that can be identified with a label having references regarding the type, date and features.

The adjusting of the magnetic stirring bar revolutions is required if the deviation between activity value is not comprised in the tolerated repeatability statistic error of $\pm$ 3 seconds, after tests on the latest two samples.

The test method starts with preparing the sample which is taken and identified and placed in a dry and clean container with hermetic closure. The sample is the homogenized by energetically stirring the container and if required by using the spoon for dispersing incidental big agglomerations (delicately operating for avoiding the alteration of the grain size).

Then, the measuring of the International Activity requires to measure with a 50 ml pipette (A) 100 ml of acid citric solution 0.4 N and to pour it in a 250 ml flask.

Then the magnetic stirring bar is placed in the flask and the latter is closed with the rubber cup with the thermometer inserted, placed so as to be drawing in the liquid, without touching the stirring bar.

In the following, the solution is heated to 30 °C placing the flask in the thermostatic cup with water at 30 °C disposed on the plate of a magnetic stirrer.

Once the temperature of 30 °C is reached in the flask, 2 $\pm$ 0.0010 g of magnesite under test are introduced with a single quick move, avoiding the adhesion of grains on the flask walls. Such operation and the next are performed in a thermostatic room but without keeping the flask in water so as not to distort the kinetic, which is function of the increasing of temperature caused by the exothermic features of the reaction.

The flask is the placed on the stirrer, and isolated from a direct contact with the metallic plate.

In order to perform the measuring the chronometer and the magnet revolution are simultaneously operated, the revolution being incidentally strong enough for obtaining an energetic stirring.

The time in seconds required in order to the phenolphthalein in the solution makes the colour of the suspension appear pale pink, that could be recorded by the chronometer in seconds, therefore provided the measuring of the International Activity.

Therefore, the composition according to the present invention comprises light magnesium oxide, thus with chemical-physical features similar to the above mentioned ones, in an amount equal to 50% of the composition total weight.

A liquid part is added to such powdered part, the liquid part comprising a magnesium chloride solution, or a mixture of magnesium chloride and sulphate wherein the amount of magnesium sulphate can be up to 25% of chloride amount, with a density of the solution comprised between 22° Bé and 30° Bé. In particular such density correspond to a range comprised between about 1.18 g/cm$^3$ and 1.26 g/cm$^3$. Such solution will be then present in an amount lower or equal to about 50% of the composition total weight. Advantageously, an setting retarder additive agent can be added in an amount up to about 1% of the composition total weight, allowing to increase the composition workability time, without compromising the curing times. In particular, the use of such setting retarder additive agent will be then recommended in the time of the year in which the environmental temperature is higher.

As setting retarder can be then used a compound belonging to the group of phosphates or alkyl-phosphonates, or also carboxylic acids such as citric, tartaric, gluconic and salts thereof etc. Such retarders are anyhow known to a person skilled in the art, but they are normally used for retarding cement setting in order to preserve as much as possible the concrete workability time, in particular for transport needs, for obtaining castings by means of pumping, summer castings with high temperatures or castings having great thickness.

With reference again to the components in the liquid part, it should be noted that since it contains as an alternative to the only magnesium chloride a magnesium chloride and magnesium sulphate mixture, wherein the latter contains an amount at most equal to about 25% of the magnesium chloride weight, the amount of magnesium chloride will be higher than 39.2% of the composition total weight and, as previously mentioned, lower than 50%.

Accordingly, such composition advantageously allows to obtain, possibly after adding aggregates, decorative elements with various shapes and aspects by mould casting.

Firstly, it should be noted that the composition according to the present invention has an high productivity since up to three times in weight of aggregates of various nature and size can be added, without particularly modifying the aesthetic and functional features of the final product.

Then, the mixture formed by the composition according to the present invention and possibly by the above mentioned aggregates will have fluidity features such as it can be poured in suitable moulds, provided in order to obtain the desired decorative elements. E.g. such moulds can form the matrix for statues, jars, tiles, tiles having various projecting decorations, elements with irregular shape or thickness, etc.

In deeper detail, the composition, possibly added with the above mentioned aggregates, will be poured or casted in moulds within 20 minutes from the mixture preparation and, one casted in the mould, it will be cured enough in 60-200 minutes, thus allowing a correct shakeout of the element to be manufactured. Therefore, such shakeout times are particularly reduced and they allows to warrantee an high industrial productivity.

Moreover, it should be noted that the curing speed is essentially due to the light magnesium oxide features that, after grinding, it has an high solubility and thus at the same time an high reactivity with the magnesium chloride or magnesium chloride and sulphate aqueous solution. As previously mentioned, such property can be obtained by means of a magnesium oxide having in particular an international activity comprised between 30 and 60 seconds. In fact, this feature involves a quick hardening of the mixture formed by magnesium oxide and chloride and, accordingly, the composition according to the present invention can provide high productivity features. In particular, opposite to magnesium oxide and chloride mixtures used in the known art in the manufacturing of decorative elements by mould casting, a setting retarder additive agent is used, for the high reactivity of the powdered part used in the composition according to the present invention.

As a consequence, due to the variation of the amount of retarding agent added, the setting and shakeout times can be optimized according to the specific needs.

Therefore, it should be noted that the composition accordingly obtained has deeply respects environment and ecology, since, in addition to magnesium products, and the setting retarders, that can be completely natural, it does note comprise any resin or other harmful products, moreover providing only easily disposable wastes.

Moreover, always due to the almost exclusive use of magnesium based products, the final aspect of the decorative element hereby obtained will be comparable to the ones obtained with natural stones.

Finally, elements hereby obtained will have an high mechanical strength, in particular equal to or higher than

20.0 N/mm$^2$ after 4 hours from casting, in case of a composition, cured at room temperature and obtained by adding 1 part of the above mentioned composition with 2 parts of aggregates.

The present invention has hereto been described with reference to preferred embodiments thereof. It is understood that there could be other embodiments referable to the same inventive kernel, all falling within the protective scope of the claims set forth hereinafter.

## Claims

1. A composition for the making of decorative elements by mould casting, comprising:

   - a powdered part comprising magnesium oxide in an amount equal to about 50% of the composition total weight, said magnesium oxide having an International Activity, measured according to the acid citric method, higher than about 30 seconds and lower than about 60 seconds;
   - a liquid part comprising a magnesium chloride solution in an amount higher than about 39.2% and lower than about 50% of the composition total weight.

2. Composition according to claim 1, wherein said liquid part further comprises a setting retarder additive agent in an amount lower than about 1% of the composition total weight.

3. The composition according to any of claims 1 to 2, wherein said magnesium oxide granulometry such that the percentage of grains retained by a 106 $\mu$m sieve is lower than about 1%, the percentage of grains retained by a 63 $\mu$m sieve is lower than about 10%, and the percentage of grains retained by a 53 $\mu$m is lower than 8%.

4. The composition according to any of claims 1 to 3, wherein said magnesium oxide has an amount of MgO higher than about 82% and lower than about 92%, an amount of CaO lower than about 3 % and of various oxides $R_2O_3$ lower than about 0.8%.

5. The composition according to any of claims 1 to 4, wherein said magnesium oxide has an insoluble residue higher than about 8% and lower than 13%.

6. The composition according to any of claims 1 to 5, wherein said magnesium oxide has a loss on ignition at 1000 °C lower than 6%.

7. The composition according to any of claims 1 a 6, wherein said magnesium oxide has a compacted specific weight higher than about 0.75 kg/l and lower than about 0.90 kg/l.

8. The composition according to any of claims 1 to 7, wherein said setting retarder additive agent are selected from one of the following groups: phosphate, alkyl-phosphonates, carboxylic acids, citric acid, tartaric acid, gluconic acid and salts of said acids.

9. The composition according to any of claims 1 to 8, wherein said liquid part further comprising a magnesium sulphate solution in an amount lower than 25% of the weight of the magnesium chloride solution.

10. The composition according to claim 9, wherein said solution of magnesium chloride and sulphate has a density comprised between about 1.18 g/cm$^3$ and about 1.26 g/cm$^3$.

11. The composition for the manufacturing of a decorative element comprising a composition according to any of claims 1 to 10 and aggregates in an amount lower than about 3 times the weight of said composition.

12. A method for the manufacturing of a decorative element comprising the steps of:

    • providing a powdered part comprising magnesium oxide, said magnesium oxide being obtained by means of calcining a mineral comprising magnesium carbonate, said calcining being apt to convert substantially completely the magnesium carbonate in magnesium oxide and being such that the surface of said calcined mineral is substantially not sintered;
    • providing a liquid part comprising a magnesium chloride solution in an amount higher than about 39.2% and lower than about 50% of the composition total weight;

• preparing a composition by mixing said powdered part and said liquid part, wherein said powdered part and said liquid part are both present in an amount equal to about 50% of the total weight of said composition;
• pouring said composition in a mould;
• shaking out said decorative element.

13. The method according to claim 12, wherein said calcing is performed in rotating furnaces, wherein baking time and temperature are adjusted so that the magnesium carbonate is substantially completely converted in magnesium oxide and so that the sintering of said calcined mineral is substantially not sintered substantially does not occur.

14. The method according to any of claims 12 to 13, comprising a further step of adding an aggregate to said composition obtained by mixing said powdered part and said liquid part, said aggregate being in an amount in weight lower than or equal to about three times the weight of said composition.

15. The method according to any of claims 13 to 14, wherein said liquid part is obtained by mixing said magnesium chloride solution and a magnesium sulphate solution, said magnesium sulphate solution being in an amount lower than 25% in weight of the magnesium chloride solution.

16. A kit for the making of decorative elements comprising a first packaging containing a powdered part as described in any of claims 1 to 11, a second packaging containing a liquid part as described in any of claims 1 to 11 and instruction for mixing said powdered part and said liquid part so as to obtain the composition as described in any of claims 1 to 11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007014168 A
- CN 1223979 A, Wang Jianguo